# DEMANDE DE BREVET EUROPEEN

(11) **EP 3 416 255 A1**
(43) Date de publication de la demande: **19.12.2018**
(21) Numéro de dépôt: 18177068.6
(22) Date de dépôt: 11.06.2018
(51) Int. Cl.: H02H 7/12

(54) **ALIMENTATION ÉLECTRIQUE STABILISÉE EN MODULATION DE LARGEUR D'IMPULSIONS**

(30) Priorité: 15.06.2017 FR 1755443
(71) Demandeur: Valeo Vision, 93012 Bobigny Cedex (FR)
(72) Inventeur: GUILLOT, Bernard, 93012 BOBIGNY Cedex (FR); JAUREGI, Irantzu, 93012 BOBIGNY Cedex (FR)
(74) Mandataire: Valeo Vision

(57) **Abrégé**

L'invention a trait à un dispositif d'alimentation électrique (102) d'un composant électronique (LED1, LED2, LED3), comprenant un convertisseur DC/DC (104) apte à fonctionner en modulation de largeur d'impulsions avec des états hauts et des états bas, avec une entrée et une sortie, ladite sortie étant destinée à alimenter le composant électrique (LED1, LED2, LED3) ; et un circuit de protection (106) connecté à l'entrée du convertisseur DC/DC (104), avec un composant capacitif réservoir (C2) connecté à une diode de protection (D1) contre les inversions de polarité. Le circuit de protection (106) comprend, en outre, un moyen de contournement (106.1) de la diode de protection (D1) afin de permettre au composant capacitif réservoir (C2) de se décharger pendant les états bas de la modulation de largeur d'impulsions.

## Description

L'invention a trait au domaine de l'alimentation électrique de composants tels que des sources lumineuses à semi-conducteur, notamment sur des véhicules automobiles.

L'utilisation de sources lumineuses du type diode à électroluminescence (LED) est de plus en plus courante, notamment pour l'éclairage et la signalisation lumineuse sur des véhicules automobiles. Les LEDs, comme tous les composants électroniques, ont des limites maximales de température de fonctionnement, ce qui conditionne en partie leur durée de vie. Une LED se comporte électriquement comme une diode, signifiant que pour émettre elle doit être polarisée en direct. La tension directe ou tension de conduction (« forward voltage ») est la tension à ses bornes lorsqu'elle est parcourue par un courant et qu'elle émet de la lumière. Cette tension augmente avec le courant et est habituellement comprise entre 1,5 et 4 Volt. Elle dépend également de la température. Comme tout composant électrique et électronique, une LED présente un courant maximum admissible. Le courant traversant la LED détermine non seulement l'intensité lumineuse émise mais a également un impact sur sa durée de vie,son rendement et sa couleur émise. En effet, une LED parcourue par un courant trop important verra sa durée de vie, son rendement réduit avec le temps et sa couleur émise changer. Pour toutes ces raisons, il est adéquat d'alimenter une LED via un dispositif régulant le courant. Dans certains cas, notamment quand il faut respecter une chromaticité précise, mais qu'il faut baisser fortement l'intensité lumineuse, il est courant de commander le dispositif régulant le courant en modulation de largeur d'impulsions (plus couramment désigné PWM acronyme de « Pulse Width Modulation ») tout en gardant une intensité de courant constante pendant les états hauts. L'oeil humain aura l'impression que l'intensité a baissé, mais que la couleur est constante. Or, si on baissait le courant de la même manière, mais de façon constante, l'oeil humain verrait la même variation d'intensité lumineuse désirée, mais verrait aussi un changement de couleur (non désiré).

Il est par ailleurs courant d'utiliser un convertisseur DC/DC, tel qu'un convertisseur Buck, Boost, SEPIC, Flyback, formant une alimentation à découpage qui convertit une tension continue en une autre tension continue de plus faible valeur ou de valeur plus élevée.

Dans le cas d'applications sur véhicules automobiles, un tel convertisseur est alimenté par la tension de bord du véhicule, à savoir de l'ordre de 12 Volt. Or, la tension de bord d'un véhicule peut subir de très brèves surtensions de l'ordre de 100 à 250 Volt. De telles brèves surtensions ont pour effet de charger un condensateur connecté aux bornes d'entrée du convertisseur DC/DC et ainsi de créer des surtensions d'alimentation susceptibles de perturber le bon fonctionnement dudit convertisseur.

L'invention a pour objectif de pallier au moins un des problèmes de l'état de la technique susmentionné. Plus particulièrement, l'invention a pour objet de pallier les problèmes de perturbations créées par des brèves surtensions à l'entrée d'un convertisseur DC/DC alternativement activé et désactivé et alimentant un composant électronique tel qu'une ou plusieurs sources lumineuses du type LED.

L'invention a pour objet un dispositif d'alimentation électrique d'un composant électronique, comprenant un convertisseur DC/DC apte à fonctionner en modulation de largeur d'impulsions avec des états hauts et des états bas, avec une entrée et une sortie, ladite sortie étant destinée à alimenter le composant électrique ; un circuit de protection connecté à l'entrée du convertisseur DC/DC, avec un composant capacitif réservoir connecté à une diode de protection contre les inversions de polarité ; remarquable en ce que le circuit de protection comprend, en outre, un moyen de contournement de la diode de protection afin de permettre au composant capacitif réservoir de se décharger pendant les états bas de la modulation de largeur d'impulsions.

Pour la connexion entre le circuit de protection et l'entrée du convertisseur DC/DC, on entend une connexion directe, c'est-à-dire borne à borne, autant qu'une connexion indirecte, par exemple avec des composants.

Selon un mode avantageux de l'invention, le moyen de contournement est connecté en parallèle à la diode de protection.

Selon un mode avantageux de l'invention, le moyen de contournement est configuré pour n'être actif que lorsque la tension au composant capacitif réservoir est supérieure à la tension d'entrée du dispositif.

Selon un mode avantageux de l'invention, le moyen de contournement est configuré pour que le courant de décharge du composant capacitif réservoir en contournement de la diode de protection soit fonction de la différence entre la tension au composant capacitif réservoir et la tension d'entrée du dispositif.

Selon un mode avantageux de l'invention, le moyen de contournement comprend un transistor bipolaire PNP avec un émetteur connecté à l'anode de la diode de protection et un collecteur connecté à la cathode de ladite diode.

Selon un mode avantageux de l'invention, le moyen de contournement comprend une résistance connectée entre le collecteur du transistor et l'anode de la diode de protection et/ou une résistance connectée entre l'émetteur du transistor bipolaire PNP et la cathode de la diode de protection.

Selon un mode avantageux de l'invention, la résistance a une valeur supérieure à 1 Ohm et/ou inférieure à 100 Ohm.

Selon un mode avantageux de l'invention, le transistor bipolaire PNP comprend une base connectée à la masse.

Selon un mode avantageux de l'invention, le moyen de contournement comprend une résistance connectée entre la base du transistor et la masse.

Selon un mode avantageux de l'invention, la résistance a une valeur supérieure à 100 Ohm et/ou inférieure à 47 000 Ohm.

Selon un mode avantageux de l'invention, le moyen de contournement comprend une diode et une résistance connectées en série, ladite diode étant orientée à l'opposé de la diode de protection.

Selon un mode avantageux de l'invention, la résistance a une valeur supérieure à 1 000 Ohm et/ou inférieure à 20 000 Ohm.

Selon un mode avantageux de l'invention, la diode du moyen de contournement est une diode unipolaire.

Selon un mode avantageux de l'invention, la diode du moyen de contournement est un transistor bipolaire NPN à base dans le collecteur.

L'invention a également pour objet un dispositif lumineux, notamment pour véhicule automobile, comprenant au moins une source lumineuse à semi-conducteur, notamment du type diode à électroluminescence ; un dispositif d'alimentation électrique de la ou des sources lumineuses ; remarquable en ce que le dispositif d'alimentation électrique est selon l'invention.

Les mesures de l'invention sont intéressantes en ce qu'elles permettent d'éviter les problèmes de variation d'alimentation du composant en cas de surtensions au niveau de la tension d'entrée du dispositif d'alimentation. De telles surtensions sont notamment courantes dans les réseaux de bord de véhicules automobiles. Ces surtensions peuvent atteindre des valeurs de 100 à 250 Volts. Elles sont cependant très brèves. Les mesures de l'invention sont d'autant plus utiles que le rapport cyclique du signal PWM qui active et désactive le convertisseur est faible, car c'est précisément durant les périodes d'état bas du convertisseur, c'est-à-dire lorsqu'il est désactivé et donc ne consomme pas de courant, que les surtensions d'alimentation sont susceptibles de perturber le bon fonctionnement du convertisseur lors de l'activation qui suit la surtension en question, survenue pendant une période de désactivation du convertisseur.

D'autres caractéristiques et avantages de la présente invention seront mieux compris à l'aide de la description et des dessins parmi lesquels :
- La figure 1 illustre un dispositif d'alimentation électrique selon l'art antérieur ;
- La figure 2 illustre les tensions V et V' et le courant I du dispositif d'alimentation de la figure 1 en présence d'une surtension ;
- La figure 3 illustre un dispositif d'alimentation électrique selon un premier mode de réalisation de l'invention ;
- La figure 4 illustre un dispositif d'alimentation électrique selon un deuxième mode de réalisation de l'invention ;
- La figure 5 illustre un dispositif d'alimentation électrique selon un troisième mode de réalisation de l'invention ;
- La figure 6 illustre les tensions V et V' et le courant I des dispositifs d'alimentation des figures 3 à 5 en présence d'une surtension.

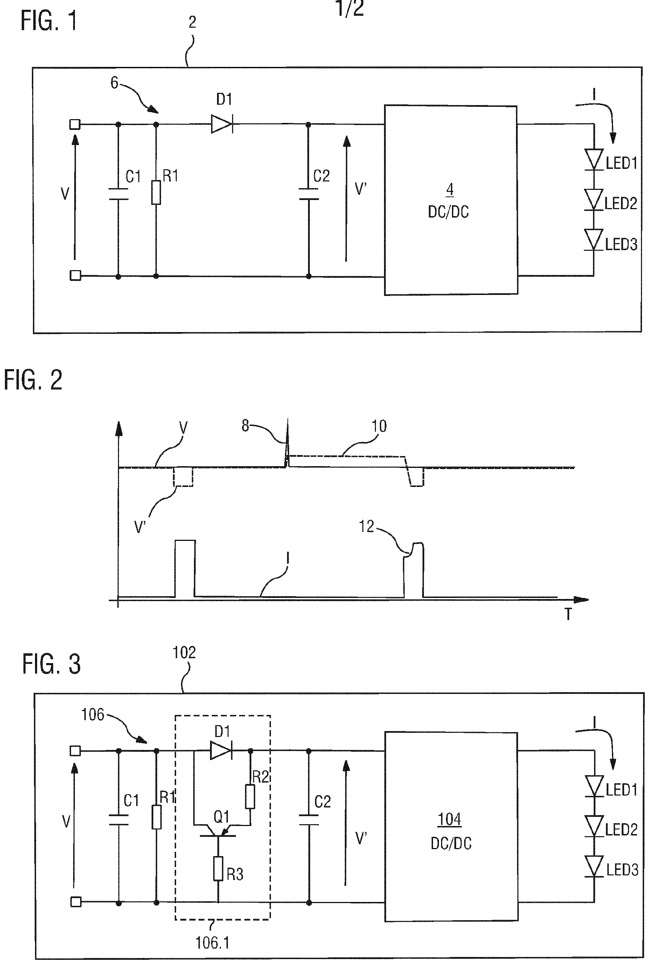

Les figures 1 et 2 illustrent un dispositif d'alimentation électrique connu et la conséquence d'une brève surtension sur le courant d'alimentation.

Le dispositif d'alimentation électrique 2 comprend, essentiellement, un convertisseur DC/DC et un circuit de protection 6 du convertisseur.

Le convertisseur DC/DC 4 peut être un convertisseur Buck, Boost, SEPIC, Flyback, ..., c'est-à-dire une alimentation à découpage qui convertit une tension continue en une autre tension continue de plus faible valeur ou de valeur plus élevée. Il comprend essentiellement une inductance (simple, double, transformateur, ...), un interrupteur et une diode. Lorsque l'interrupteur est fermé, le courant généré par la tension d'entrée traverse l'inductance et augmente linéairement. La tension aux bornes de la diode étant négative, aucun courant ne la traverse. Lorsque l'interrupteur est ouvert, la diode devient passante afin d'assurer la continuité du courant dans l'inductance, et le courant traversant l'inductance décroît. De tels convertisseurs sont bien connus en soi de l'homme de métier.

Le circuit de protection 6 comprend un condensateur C1 et une résistance R1 connectées en parallèle, permettant de filtrer des fluctuations de tensions d'entrée V. Il comprend une diode de protection D1 protégeant le convertisseur 4 contre une inversion de tension d'alimentation. Il comprend également un condensateur C2 destinée à former une réserve d'énergie électrique pour compenser d'éventuelles microcoupures.

Lorsque la tension d'alimentation V est constante, la tension V' aux bornes d'entrée du convertisseur DC/DC 4, diminuée de la tension seuil de la diode D1, est également constante. Lors d'une surtension de valeur élevée mais de courte durée 8 à la tension d'alimentation V alors que le convertisseur 4 est désactivé par un état bas de la modulation en largeur d'impulsions et donc ne délivre aucun courant aux composants LED1, LED2 et LED3, le condensateur C2 va se charger et la tension V' va présenter un ressaut 10. Ce ressaut reste constant tant qu'il n'y a aucune consommation au convertisseur 4. Dès que celui-ci devient actif, c'est-à-dire débite un courant I dans les composants LED1, LED2 et LED3, il va observer une tension d'entrée supérieure à la tension nominale et va conséquent réagir pour adapter le courant de sortie. Or la tension d'entrée V' va très rapidement revenir au niveau nominal de sorte que le courant de sortie I va présenter une augmentation avec un petit palier intermédiaire plus bas 12 résultant en un vacillement dans l'intensité lumineuse des LEDs.

La figure 3 illustre un dispositif d'alimentation électrique selon un premier mode de réalisation de l'invention.

Le dispositif d'alimentation 102 est similaire à celui de la figure 1, à la différence que le circuit de protection 106 comprend un moyen de contournement 106.1 de la diode D1 en vue de décharger le condensateur C2 en l'absence de consommation par le convertisseur 104. Il est par ailleurs fait référence à la description du dispositif d'alimentation de la figure 1 pour les éléments identiques ou similaires.

Le moyen de contournement 106.1 comprend un transistor bipolaire Q1 du type PNP dont l'émetteur est connecté à l'anode la diode D1 et le collecteur est connecté à la cathode de la diode D1, avantageusement via une résistance R2. La résistance R2 présente une valeur faible, par exemple supérieure à 1 Ohm et/ou inférieure à 100 Ohm. Cette plage de valeur est destinée à favoriser le passage du courant. Dans le cas où il faudrait limiter ce courant pour une raison particulière, il suffit d'augmenter très facilement la valeur de cette résistance pour baisser la valeur du courant. La base du transistor Q1 est connectée quant à elle au potentiel bas de la tension d'alimentation V, en l'occurrence à la masse, et ce avantageusement via la résistance R3. Elle peut présenter une valeur supérieure à 1 000 Ohm et/ou inférieure à 47 000 Ohm. Sa valeur peut être sélectionnée suivant la valeur de l'impédance voulue entre l'anode ou la cathode de la diode et la masse, tout en permettant au transistor d'être passant.

En l'absence de surtension à la tension d'alimentation V, la tension V' aux bornes d'entrée du convertisseur DC/DC 104, diminuée de la tension seuil de la diode D1 lorsque le convertisseur DC/DC 104 est actif et qu'un courant d'alimentation circule, est constante. Le courant de base du transistor Q1 est faible, essentiellement en raison de la valeur élevée de la résistance R3. Dans ce cas, le collecteur et l'émetteur du transistor Q1 sont polarisés et un courant de contournement de la diode D1 peut circuler. Un tel courant ne circule cependant pas compte tenu que V'≤V.

En présence d'une brève surtension à la tension d'alimentation V alors que le convertisseur 104 ne débite pas de courant, le condensateur C2 va se charger et la tension V' va augmenter au point de devenir supérieure à la tension V qui, suite à la brève surtension, est revenue à une valeur « stable » (par exemple, la valeur nominale). La tension V' augmentée va alors provoquer une augmentation du courant de base du transistor Q1 et ainsi augmenter le courant de collecteur correspondant à un courant de contournement de la diode D1 qui va décharger le condensateur C2.

La protection contre une inversion de tension d'alimentation, assurée par la diode D1, reste active car le dispositif de contournement est désactivé en cas d'inversion de polarité par le fait que la jonction base-émetteur du transistor Q1 est alors polarisée en inverse et donc bloquée. Le moyen de contournement de la diode D1, de par la présence du transistor Q1, présente un comportement potentiellement non linéaire qui réagit spécifiquement aux situations où la tension V' est sensiblement supérieure à la tension nominale. Le temps de décharge du condensateur C2 peut alors être très court.

La décharge du condensateur C2, qui vient d'être décrite permet ainsi d'éviter le phénomène de vacillement au niveau de l'intensité lumineuses des LEDs. En effet, la décharge rapide du condensateur C2 suite à une brève surtension de la tension d'alimentation alors que le convertisseur 104 ne débite pas de courant (c'est-à-dire que la modulation en largeur d'impulsions est à l'état bas) évite une élévation de la tension V' aux bornes d'entrée du convertisseur 104 au moment où ce dernier redevient actif et évite ainsi des phénomènes transitoires d'adaptation du convertisseur à une rapide variation de la tension d'entrée du convertisseur.

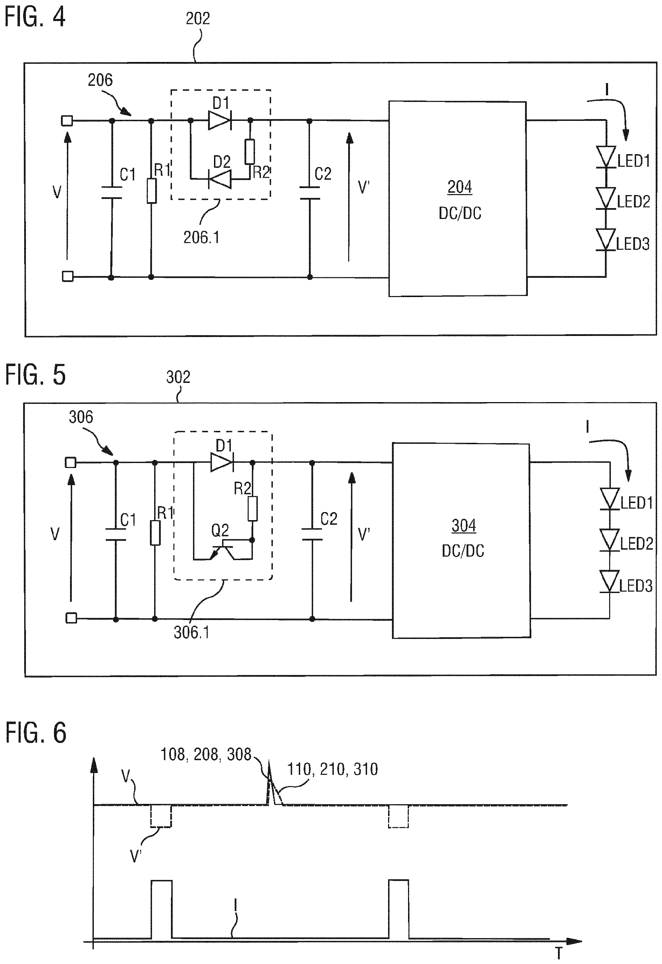

La figure 4 illustre un dispositif d'alimentation électrique selon un deuxième mode de réalisation de l'invention. Les numéros de référence de la figure 3 sont utilisés pour désigner les éléments identiques ou similaires, ces numéros étant toutefois majorés de 100. Il est par ailleurs fait référence à la description de ces éléments en relation avec la figure 3 et la figure 1.

Le dispositif d'alimentation 202 est similaire à celui de la figure 3, à la différence que le moyen de contournement 206.1 de la diode D1, au circuit de protection 206, est différent. En effet, le moyen de contournement comprend une diode D2 connectée aux bornes de la diode de protection D1 et en sens inverse. En d'autres termes, l'anode de la diode D2 est connectée à la cathode de la diode D1 et la cathode de la diode D2 est connectée à l'anode de la diode D1. Plus spécifiquement, une résistance R2 est connectée en série avec la diode D2 afin de limiter le courant de contournement de la diode D1 en cas d'inversion de la tension d'alimentation. Cette résistance R2 présente avantageusement une valeur supérieure à 1 000 Ohm et/ou inférieure à 20 000 Ohm.

En présence d'une brève surtension à la tension d'alimentation V alors que le convertisseur 204 ne débite pas de courant, le condensateur C2 va se charger et la tension V' va augmenter au point de devenir supérieure à la tension V qui, suite à la brève surtension, est revenue à une valeur « stable » (par exemple, la valeur nominale). Le condensateur va alors pouvoir se décharger via un courant de contournement de la diode D1, via la diode D2 polarisée en direct, la diode D1 étant alors polarisée en inverse. Le courant de décharge est naturellement limité par la résistance R2. Cette dernière peut alors être dimensionnée pour, d'une part, assurer une décharge suffisamment rapide du condensateur C2 pour éviter un fonctionnement instable du convertisseur 204 lorsqu'il redevient actif, et, d'autre part, protéger le convertisseur 204 contre un courant inverse qui résulterait d'une inversion de la tension d'alimentation.

La figure 5 illustre un dispositif d'alimentation électrique selon un troisième mode de réalisation de l'invention. Les numéros de référence de la figure 3 sont utilisés pour désigner les éléments identiques ou similaires, ces numéros étant toutefois majorés de 200. Il est par ailleurs fait référence à la description de ces éléments en relation avec les figures 4, 3 et 1.

Le dispositif d'alimentation 302 est similaire à celui de la figure 4, à la différence que le moyen de contournement 306.1 de la diode D1, au circuit de protection 206, est quelque peu différent en ce que la diode D2 est remplacée par un transistor bipolaire Q2 du type NPN en polarisation par réaction de collecteur. En d'autres termes, la base est directement connectée à l'émetteur du transistor Q2, ce qui revient à dire que le transistor Q2 se comporte comme une diode. Plus précisément, le collecteur du transistor Q2 est connectée à la cathode de la diode D1 et l'émetteur dudit transistor est connecté à l'anode de ladite diode. Similairement au mode de réalisation de la figure 4, une résistance R2 est connectée en série avec le transistor Q2 afin de limiter un courant inverse qui résulterait d'une inversion de la tension d'alimentation. Cette résistance R2 présente avantageusement une valeur supérieure à 1 000 Ohm et/ou inférieure à 20 000 Ohm.

La figure 6 illustre l'évolution des tensions V et V' et du courant I dans un des dispositifs d'alimentation des modes de réalisation des figures 3 à 5.

On peut constater que la tension V' à l'entrée du convertisseur DC/DC est légèrement inférieure à la tension d'alimentation V lorsqu'un courant d'alimentation circule, en raison de la tension de seuil de la diode de protection D1. On peut également constater que la tension d'alimentation V présente une brève surtension 108, 208 ou 308. Cette surtension provoque un chargement du condensateur C2 et une surtension 110, 210 ou 310 au niveau de la tension V'. Cette surtension est brève car le moyen de contournement 106.1, 206.1 ou 306.1 de la diode de protection D1 permet une décharge du condensateur C2. Cette décharge peut se faire dans le réseau d'alimentation qui présente en principe une impédance limitée. Toujours à la figure 6, on peut alors constater que la deuxième impulsion de courant, postérieure à la surtension, n'est pas perturbée car la tension V' a été rétablie à une valeur « stable » (par exemple à la valeur nominale) avant ladite impulsion.

De manière générale, le moyen de contournement de la diode de protection, selon l'invention, est configuré pour n'être actif que lorsque la tension au composant capacitif réservoir est supérieure à la tension d'entrée du dispositif. Dans ce cas une impédance vers l'entrée et vue du composant capacitif réservoir est avantageusement la plus faible possible et sinon très facilement ajustable en fonction des différentes contraintes. En revanche, l'impédance opposée, c'est-à-dire vers le composant capacitif réservoir et vue de l'entrée est avantageusement la plus élevée possible et est également facilement ajustable en fonction des différentes contraintes.

Les mesures de l'invention qui vient d'être décrit sont particulièrement intéressantes lorsque les impulsions de courant produites par le convertisseur DC/DC correspondent à un taux réduit, comme par exemple de 50% ou moins, c'est-à-dire lorsque la sortie du convertisseur et à l'état bas durant au moins 50% du temps. Dans le cas de la figure 6, le taux d'état haut est de l'ordre de 10%. En d'autres termes, les périodes d'état bas correspondant à 90% du temps. Cela signifie que les périodes à l'état bas sont supérieures à celles à l'état haut et que la probabilité de provoquer des vacillements dans l'intensité lumineuse produite, suite à une surtension du réseau d'alimentation, est par conséquent plus élevée.

## Revendications

1. Dispositif d'alimentation électrique (102; 202; 302) d'un composant électronique (LED1, LED2, LED3), comprenant :
- un convertisseur DC/DC (104 ; 204 ; 304) apte à fonctionner en modulation de largeur d'impulsions avec des états hauts et des états bas, avec une entrée et une sortie, ladite sortie étant destinée à alimenter le composant électrique (LED1, LED2, LED3) ;
- un circuit de protection (106 ; 206 ; 306) connecté à l'entrée du convertisseur DC/DC (104 ; 204 ; 304), avec un composant capacitif réservoir (C2) connecté à une diode de protection (D1) contre les inversions de polarité ;
**caractérisé en ce que** le circuit de protection (106 ; 206 ; 306) comprend, en outre, un moyen de contournement (106.1 ; 206.1 ; 306.1) de la diode de protection (D1) afin de permettre au composant capacitif réservoir (C2) de se décharger pendant les états bas de la modulation de largeur d'impulsions.

2. Dispositif (102 ; 202 ; 302) selon la revendication 1, **caractérisé en ce que** le moyen de contournement (106.1 ; 206.1 ; 306.1) est connecté en parallèle à la diode de protection (D1).

3. Dispositif (102 ; 202 ; 302) selon l'une des revendications 1 et 2, **caractérisé en ce que** le moyen de contournement (106.1 ; 206.1 ; 306.1) est configuré pour n'être actif que lorsque la tension (V') au composant capacitif réservoir (C2) est supérieure à la tension d'entrée (V) du dispositif.

4. Dispositif (102 ; 202 ; 302) selon l'une des revendications 1 à 3, **caractérisé en ce que** le moyen de contournement (106.1 ; 206.1 ; 306.1) est configuré pour que le courant de décharge du composant capacitif réservoir (C2) en contournement de la diode de protection (D1) soit fonction de la différence de tension entre la tension (V') au composant capacitif réservoir (C2) et la tension d'entrée (V) du dispositif.

5. Dispositif (102) selon l'une des revendications 1 à 4, **caractérisé en ce que** le moyen de contournement (106.1) comprend un transistor bipolaire PNP (Q1) avec un émetteur connecté à l'anode de la diode de protection (D1) et un collecteur connecté à la cathode de ladite diode (D1).

6. Dispositif (102) selon la revendication 5, **caractérisé en ce que** le moyen de contournement (106.1) comprend une résistance (R2) connectée entre le collecteur du transistor bipolaire PNP (Q1) et l'anode de la diode de protection (D1) et/ou une résistance connectée entre l'émetteur du transistor bipolaire PNP (Q1) et la cathode de la diode de protection (D1).

7. Dispositif (102) selon la revendication 6, **caractérisé en ce que** la résistance (R2) a une valeur supérieure à 1 Ohm et/ou inférieure à 100 Ohm.

8. Dispositif (102) selon l'une des revendications 5 à 7, **caractérisé en ce que** le transistor bipolaire PNP (Q1) comprend une base connectée à un potentiel bas de l'entrée du dispositif.

9. Dispositif (102) selon la revendication 8, **caractérisé en ce que** le moyen de contournement (106.1) comprend une résistance (R3) connectée entre la base du transistor bipolaire PNP (Q1) et le potentiel bas de l'entrée du dispositif.

10. Dispositif (102) selon la revendication 9, **caractérisé en ce que** la résistance a une valeur supérieure à 1000 Ohm et/ou inférieure à 47 000 Ohm.

11. Dispositif (202 ; 302) selon l'une des revendications 1 à 4, **caractérisé en ce que** le moyen de contournement (206.1 ; 306.1) comprend une diode (D2 ; Q2) et une résistance (R2) connectées en série, ladite diode (D2 ; Q2) étant orientée à l'opposé de la diode de protection (D1).

12. Dispositif (202 ; 302) selon la revendication 11, **caractérisé en ce que** la résistance (R2) a une valeur supérieure à 1 000 Ohm et/ou inférieure à 20 000 Ohm.

13. Dispositif (202) selon l'une des revendications 11 et 12, **caractérisé en ce que** la diode du moyen de contournement (206.1) est une diode unipolaire (D2).

14. Dispositif (302) selon l'une des revendications 11 et 12, **caractérisé en ce que** la diode du moyen de contournement (306.1) est un transistor bipolaire NPN (Q2) à base dans le collecteur.

15. Dispositif lumineux, notamment pour véhicule automobile, comprenant :
- au moins une source lumineuse à semi-conducteur (LED1, LED2, LED3), notamment du type diode à électroluminescence ;
- un dispositif d'alimentation électrique (102 ; 202 ; 302) de la ou des sources lumineuses (LED1, LED2, LED3) ;
**caractérisé en ce que** le dispositif d'alimentation électrique (102 ; 202 ; 302) est selon l'une des revendications 1 à 14.
